# EUROPÄISCHE PATENTSCHRIFT

(11) **EP 2 218 666 B1**
(45) Veröffentlichungstag und Bekanntmachung des Hinweises auf die Patenterteilung: **27.06.2012**
(21) Anmeldenummer: 10151085.7
(22) Anmeldetag: 19.01.2010
(51) Int. Cl.: B65G 47/88, B65G 57/06, B65G 57/24

(54) **Verschwenkbare Begrenzungsleiste für auf einer Auflagefläche gruppierte Artikel**
Pivoting stop for items grouped on a support surface
Butée escamotable pour articles groupés sur une surface d'appui

(30) Priorität: 13.02.2009 DE 202009000109 U
(43) Veröffentlichungstag der Anmeldung: 18.08.2010
(73) Patentinhaber: Krones AG, 93073 Neutraubling (DE)
(72) Erfinder: Meyer, Thomas, 83059 Kolbermoor (DE); Geiss, Christian, 83059 Kolbermoor (DE)
(74) Vertreter: Benninger, Johannes

(56) Entgegenhaltungen:
- WO-A1-00/26126
- DE-A1- 3 003 674
- GB-A- 1 599 046

## Beschreibung

Die Erfindung betrifft eine Begrenzungsleiste für auf einer Auflagefläche gruppierte Artikel mit den Merkmalen des unabhängigen Anspruchs 1.

Bei der Gruppierung von Artikeln wie bspw. Gebinden von Getränkebehältern und Flaschen können diese auf einer Auflagefläche zu einer Gebindelage gruppiert und aneinander geschoben werden, bevor sie mittels eines höhenverstellbaren und an einem Auslegerarm seitlich verschwenkbaren Jalousiengreifers oder Greiferkopfes übernommen und auf einem mehrlagigen Palettenstapel abgelegt werden. Das Übernehmen der gruppierten Artikel bzw. Gebinde erfolgt durch seitliches Überschieben der Lage zum Jalousiengreiferkopf, der für diesen Zweck exakt auf dem Niveau der Auflagefläche und mit möglichst geringem Abstand zu dieser platziert werden muss.

Bei typischen Aufstellhöhen der gruppierten Artikellagen erfolgt ein Anfahren dieser Übernahmeposition durch den Jalousiengreifer meist von unten, wobei dessen Jalousien nach dem Ablegen der letzten Lagen meist seitlich geöffnet sind. Dadurch kann es in bestimmten Konstellationen zu Kollisionen der geöffneten Jalousien des Jalousiengreiferkopfes mit einem Übergangsblech am seitlichen Rand der Auflagefläche kommen. Dieses Übergangsblech soll einen geordneten Übergang und einen unterbrechungsfreien Überschub der gruppierten Artikel zwischen ihrer Auflagefläche und dem geöffneten Jalousiengreiferkopf gewährleisten.

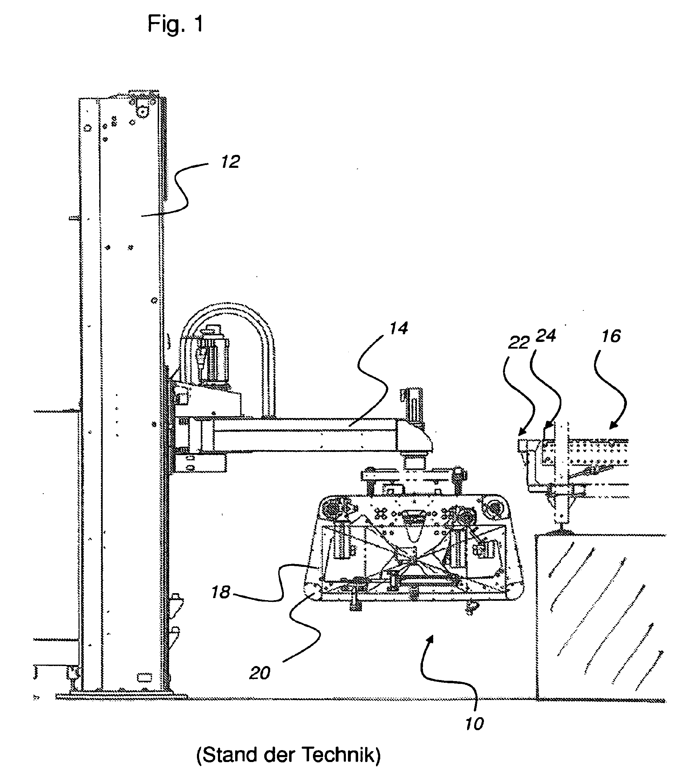

Die schematische Darstellung der Fig. 1 verdeutlicht anhand des bekannten Standes der Technik eine mögliche Kollisionssituation bei einer Hubbewegung eines Jalousiegreiferkopfes 10, der an einem vertikal entlang einer Stützsäule 12 beweglichen Auslegerarm 14 aufgehängt ist und zur Übernahme einer Lage von auf einem Auflagetisch 16 gruppierten Artikeln (nicht dargestellt) wie bspw. Gebinden mit Getränkeflaschen o. dgl. aus der gezeigten Position vertikal nach oben bewegt wird. Nach dem vorherigen Ablegen einer Lage von Artikeln durch den Jalousiegreiferkopf 10 auf einem hier ebenfalls nicht dargestellten Palettenstapel können zwar die Jalousien des Greiferkopfes 10 noch geöffnet sein, doch müssen sie für die erneute Übernahme einer Artikellage so in ihre Ausgangsposition gebracht werden, dass der Jalousiegreiferkopf 10 einen geschlossenen Boden zur Aufnahme und Ablage der Artikel aufweist. Hierzu ist ein Verschieben der zuvor geöffneten seitlichen Rollenleisten oder anderweitig ausgebildeter Jalousien über seitlich am Käfig 18 des Jalousiegreiferkopfes 10 angeordnete Umlenkrollen 20 in Richtung aufeinander zu erforderlich, so dass die Rollen oder Jalousien einen geschlossenen Boden des Greiferkopfes 10 bilden.

Die an den seitlichen Rändern der Unterseite des Käfigs 18 des Greiferkopfes 10 angeordneten Umlenkrollen 20 und/oder die darüber geführten Abschnitte der Jalousien stellen jeweils die breiteste Stelle des Jalousiegreiferkopfes 10 dar, so dass sie bei der Hubbewegung des Jalousiegreiferkopfes 10 eine Kollisionsgefahr mit einem seitlichen Randabschnitt 22 des Auflagetischs 16 bilden. Andererseits kann der Randabschnitt 22 nicht weiter verkürzt werden, da ansonsten bei einer Positionierung des Jalousiegreiferkopfes 10 in gleicher Höhe mit dem Auflagetisch 16 eine Lücke zwischen den im Käfig 18 verstellbar gelagerten und als Auflagefläche dienenden Rollenleisten des Greiferkopfes 10 und dem Auflagetisch 16 entstünde, die Störungen bei der seitlichen Überschubbewegung der Artikel in den Jalousiegreiferkopf 10 verursachen könnte, bspw. durch Verhaken einzelner Artikel.

Solange sich der Jalousiegreiferkopf 10 nicht in seiner Übernahmeposition nahe am Randabschnitt 22 und auf gleichem Niveau mit diesem befindet, dient eine vertikal nach oben geschobene Anschlagleiste 24 als Anschlag für die gruppierten Artikel und verhindert, dass diese vorzeitig über den Randabschnitt 22 geschoben werden. Um das Überführen der gruppierten Artikel in den Jalousiegreiferkopf 10 zu ermöglichen, wird diese Anschlagleiste 24 nach unten verschoben, so dass sie sich unterhalb des Niveaus des Auflagetischs 16 befindet und den zu überführenden Artikeln keinen Widerstand mehr entgegen setzen kann.

Aus der DE 34 22 765 A1 ist ein Verfahren und eine Vorrichtung zum Ent- bzw. Beladen von Gittercontainern bekannt. Hierbei werden Flaschen zum Entladen über einen Ladetisch geschoben. Beim Beladen werden die angestauten Flaschen von vorn gehalten und von hinten pulkweise von den übrigen angestauten Flaschen abgetrennt und pulkweise auf die jeweiligen Etagen der Container verbracht.

Weitere Be- und Entladevorrichtungen sind bspw. aus der DE 10 2005 017 140 A1, aus der DE 100 58 625 A1 sowie aus der GB 1 374 730 A bekannt.

Die WO 00/26 126 A1 offenbart eine Palettieranordnung für Stückgüter, mit einen Auflauf- oder Zuführbereich, der durch eine schwenkbare Stopperwalze begrenzt wird. Diese Stopperwalze ist zwischen einer oberen Stoppposition und einer unteren, unterstützenden Position schwenkbar angeordnet, in der sie die Übergabe der Stückgüter auf das nächste Förderband unterstützt. Die Anordnung zeigt zudem verschiedene Anschlagselemente, welche die Artikellagen zu einer kompakten Einheit zusammenführen, bevor diese gestapelt werden. Durch die Ausgestaltung der Anordnung mit einer Stopperwalze soll eine Beschädigung der Fördergüter während der Förderung verhindert werden.

Ein vorrangiges Ziel der Erfindung besteht darin, einen störungs- und möglichst kollisionsfreien Übergang zwischen einer beweglichen Handhabungseinrichtung für die auf einer Auflagefläche gruppierten Artikel und der Auflagefläche selbst beim seitlichen Überschieben der Artikel in die Handhabungseinrichtung bzw. einen Jalousiengreiferkopf zu ermöglichen.

Dieses Ziel wird mit dem Gegenstand des unabhängigen Anspruchs 1 dadurch erreicht, dass zwischen der Auflagefläche bzw. an deren Rand und der in die unmittelbare Nähe der Auflagefläche bringbaren Handhabungseinrichtung eine verstellbare Begrenzungsleiste angeordnet ist, die wahlweise als Anschlagleiste oder als Übergangsblech für die gruppierten Artikel fungieren kann. Die Begrenzungsleiste bildet einen seitlichen Anschlag für die auf der Auflagefläche gruppierten Artikel. Die Auflagefläche ist an drei Seiten durch aufeinander zu bewegliche Schieber begrenzt, während sie an einer vierten Seite eine Überschubstelle zu einer höhen- und/oder lagebeweglichen Handhabungseinrichtung aufweist. Die Begrenzungsleiste ist um eine parallel zur Auflagefläche und unterhalb dieser angeordneten Achse zwischen zwei Endlagen verschwenkbar. In einer ersten Endlage bildet die Begrenzungsleiste eine Anschlagleiste für die gruppierten Artikel, die einem ersten, in Richtung der Überschubstelle beweglichen Schieber gegenüber liegend angeordnet ist und auf diese Weise einerseits das lückenlose Zusammenschieben der Artikel auf der Auflagefläche gegen die Begrenzungsleiste erleichtert und andererseits die Artikel daran hindert, von der Auflagefläche geschoben zu werden, bevor dieHandhabungseinrichtung seitlich von dieser platziert und für einen Überschubvorgang vorbereitet ist.

In einer zweiten Endlage bildet die Begrenzungsleiste eine mit der Auflagefläche annähernd parallele oder in Überschubrichtung leicht nach unten geneigte Auflageleiste, die das Überschieben der gruppierten Artikel mittels des ersten Schiebers von der Auflagefläche in die Handhabungseinrichtung ermöglicht und erleichtert. Die Begrenzungsleiste ist zwischen den beiden Endlagen in Abhängigkeit von einer Position der Handhabungseinrichtung in Bezug auf die Auflagefläche verschwenkbar. Dadurch, dass die Begrenzungsleiste um eine zur Auflagefläche sowie zur vierten Seite parallele Achse verschwenkbar ist, kann sie sowohl ihre Funktionen als Anschlagleiste als auch als Auflage- bzw. Gleitfläche bzw. Auflageblech für die in die Handhabungseinrichtung zu überschiebenden Artikel in optimaler Weise erfüllen.

Gemäß einer Ausführungsvariante der vorliegenden Erfindung ist die Begrenzungsleiste mit einer steuerbaren Stelleinrichtung zur Ausführung der Schwenkbewegung zwischen den beiden Endlagen gekoppelt. So kann die Begrenzungsleiste wahlweise eine elektromotorisch betätigbare Stelleinrichtung aufweisen. Die Stelleinrichtung kann bspw. durch einen Linearmotor bzw. durch einen fluidisch betätigbaren Linearmotor gebildet sein. Zudem ist es von Vorteil, wenn die Begrenzungsleiste über wenigstens eine Koppelstange oder über ein Koppelgestänge mit der Stelleinrichtung gekoppelt ist. Auf diese Weise ist eine schnelle und präzise Stellbewegung über einen kurzen Verstellweg ermöglicht.

Eine weitere Ausführungsform der Erfindung sieht vor, dass die Begrenzungsleiste in ihrer Schwenkbewegung mit einer Stellbewegung des ersten Schiebers gekoppelt ist, so dass dieser erst dann eine Überschubbewegung in Richtung der Handhabungseinrichtung macht, wenn die Begrenzungsleiste so verschwenkt ist, dass sie weitgehend parallel zur Auflagefläche zum Liegen kommt und als Überschubblech fungieren kann.

Die Handhabungseinrichtung kann insbesondere durch einen Jalousiengreiferkopf gebildet sein, der die gruppierten Artikel als komplette Lage übernehmen und auf einen vorbereiteten Palettenstapel ablegen kann. Die Auflagefläche kann insbesondere Bestandteil einer Packstation sein, bspw. einer Packstation mit einer greifer- oder robotergestützten Sortier- bzw. Gruppierstation, in der die weitgehend ungeordneten Artikel von einer Fördereinrichtung übernommen und zu einer Platz sparend gruppierten Artikellage gedreht und verschoben werden. Die Artikel können bspw. Gebinde von Getränkebehältern oder -flaschen o. dgl. sein.

Die Begrenzungsleiste kann insbesondere durch ein geeignet geformtes Stahlblech o. dgl. gebildet sein, das zumindest an einer Stirnseite mittels des Koppelgestänges mit der Stelleinrichtung verbunden ist, so dass eine Verschwenkbewegung zwischen seinen beiden Endlagen ermöglicht wird.

Der Schwenkmechanismus gemäß der vorliegenden Erfindung weist eine Reihe von Vorteilen, insbesondere auch gegenüber dem aus der DE 34 22 765 A1 bekannten Parallelogramm-Mechanismus (vgl. dort bspw. Fig. 8) auf. So schwenkt beim erfindungsgemäßen Mechanismus die Klappe um eine knapp unterhalb der Förderebene befindliche horizontale Achse um einen Schwenkwinkel von ca. 90 Grad, und zwar zwischen einer vertikalen Lage, bei welcher die Klappe einen mechanischen Schubanschlag für die Artikel bildet, und einer horizontalen Lage, bei welcher die Klappe eine horizontale, annähernd lückenlose Verlängerung der Auflageebene bildet. Der Schwenkmechanismus ist damit sehr platzsparend, da er in der nach oben geschwenkten, einen Anschlag bildenden Lage nahezu keinen horizontalen Raum benötigt, der andernfalls nicht für Artikel zur Verfügung stünde. Die mit der vorliegenden Erfindung vorgeschlagene schwenkbare Klappe bildet zudem einen universellen Anschlag, der für verschiedene Artikelgrößen und -konturen gleichermaßen geeignet ist. Nicht zuletzt ist die Anlenkung der erfindungsgemäßen Klappe relativ einfach, dabei sehr zuverlässig und störungssicher und zudem kostengünstig zu realisieren.

Weitere Merkmale, Ziele und Vorteile der vorliegenden Erfindung gehen aus der folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt eine schematische Darstellung einer Anordnung eines beweglichen Jalousiegreiferkopfes und eines Auflagetischs zum Gruppieren von Artikeln gemäß dem bekanntem Stand der Technik.
Fig. 2 zeigt eine schematische Darstellung eines Ausführungsbeispiels einer erfindungsgemäßen Anordnung eines beweglichen Jalousiegreiferkopfes und eines Auflagetischs zum Gruppieren von Artikeln.
Fig. 3 zeigt eine schematische Seitenansicht einer Ausführungsvariante einer zwischen zwei Endlagen verschwenkbaren Begrenzungsleiste mit zugehörigem Verstellmechanismus.
Fig. 4 zeigt eine perspektivische Darstellung der Begrenzungsleiste gemäß Fig. 3.

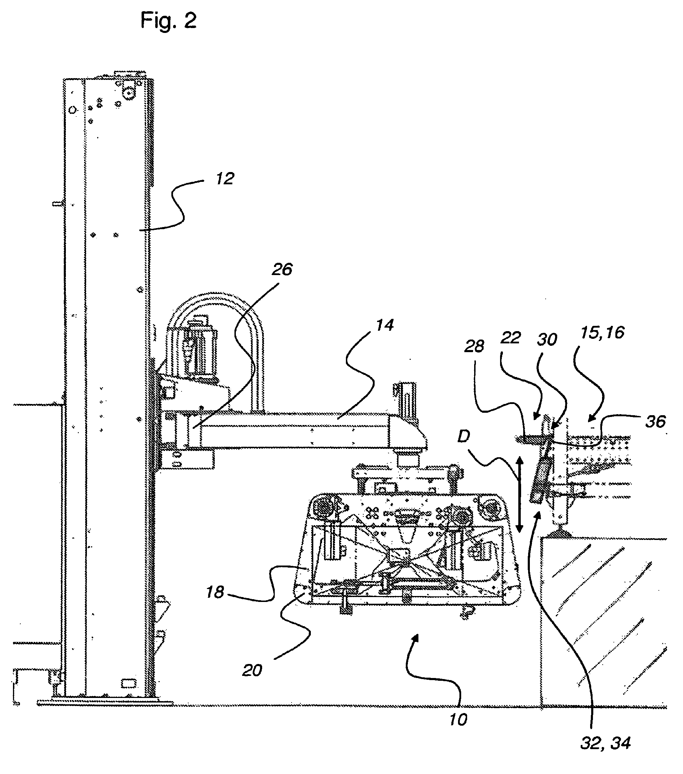

Die schematische Darstellung der Fig. 2 zeigt ein Ausführungsbeispiel einer erfindungsgemäßen Anordnung eines beweglichen Jalousiegreiferkopfes 10 und eines Auflagetischs 16 zum Gruppieren von hier nicht dargestellten Artikeln. Die Artikel können bspw. Gebinde mit Getränkebehältern sein, die auf dem Auflagetisch 16 mittels eines Greiferarms oder mehrerer Greiferarme, ggf. unterstützt durch ein optisches Erkennungssystem sowie durch horizontal verschiebbare Leisten, zu rechteckförmigen, weitgehend lückenlosen Gruppen zusammen geschoben werden können. Der Jalousiegreiferkopfes 10 ist in bekannter Weise an einem vertikal entlang einer Stützsäule 12 beweglichen Auslegerarm 14 aufgehängt und kann zur Übernahme einer Lage von auf einem Auflagetisch 16 gruppierten Artikeln aus der gezeigten Position vertikal nach unten und oben bewegt werden. Zudem kann der Auslegerarm 14 um ein säulennahes Schwenkgelenk 26 mit vertikaler Schwenkachse in horizontaler Richtung zwischen einer Übernahmeposition eines seitlichen Randabschnitts 22 des Auflagetischs 16 und einer hier nicht dargestellten Ablageposition für die Lagen mit Artikeln bewegt werden.

Nach dem Ablegen einer Lage von Artikeln durch den Jalousiegreiferkopf 10 auf einer hier nicht dargestellten Ablageposition, bspw. auf einem Palettenstapel, können die Jalousien des Greiferkopfes 10 noch geöffnet sein. Für die erneute Übernahme einer Artikellage vom Ablagetisch 16 sind die Jalousien so in ihre Ausgangsposition gebracht, dass der Jalousiegreiferkopf 10 einen geschlossenen Boden zur Aufnahme und Ablage der Artikel aufweist. Hierzu ist ein Verschieben der zuvor geöffneten seitlichen Rollenleisten oder anderweitig ausgebildeten Jalousien über seitlich am Käfig 18 des Jalousiegreiferkopfes 10 angeordnete Umlenkrollen 20 in Richtung aufeinander zu erforderlich, so dass die Rollen oder Jalousien einen geschlossenen Boden des Greiferkopfes 10 bilden.

Die an den seitlichen Rändern der Unterseite des Käfigs 18 des Greiferkopfes 10 angeordneten Umlenkrollen 20 und/oder die darüber geführten Abschnitte der Jalousien stellen jeweils die breiteste Stelle des Jalousiegreiferkopfes 10 dar, so dass sie bei der Hubbewegung des Jalousiegreiferkopfes 10 dem seitlichen Randabschnitt 22 des Auflagetischs 16 sehr nahe kommen. Wie in Fig. 2 erkennbar, ist zwischen dem Auflagetisch 16 bzw. an dessen Randabschnitt 22 und dem nahe an den Auflagetisch 16 bringbaren Jalousiegreiferkopf 10 eine verstellbare Begrenzungsleiste 28 angeordnet, die wahlweise als Anschlagleiste oder als Auflageleiste für den Überschub der gruppierten Artikel in den Jalousiegreiferkopf 10 fungieren kann. Die Begrenzungsleiste 28 bildet somit einerseits einen seitlichen Anschlag für die auf dem Auflagetisch 16 gruppierten Artikel. Eine Auflagefläche 15 des Auflagetischs 16 ist an drei Seiten durch aufeinander zu bewegliche Schieber begrenzt, während sie an ihrer vierten Seite die Überschubstelle zum höhen- und lagebeweglichen Jalousiegreiferkopf 10 aufweist.

Die Begrenzungsleiste 28 ist um eine parallel zur Auflagefläche 15 und unterhalb dieser angeordneten Schwenkachse 30 zwischen zwei Endlagen verschwenkbar. In einer ersten Endlage bildet die vertikal gestellte Begrenzungsleiste 28 eine Anschlagleiste für die gruppierten Artikel, die einem ersten, in Richtung der Überschubstelle beweglichen Schieber (nicht dargestellt) gegenüber liegend angeordnet ist und auf diese Weise einerseits das lückenlose Zusammenschieben der Artikel auf dem Auflagetisch 16 gegen die Begrenzungsleiste 28 erleichtert und andererseits die Artikel daran hindert, vom Auflagetisch 16 geschoben zu werden, bevor der Jalousiegreiferkopf 10 am Randabschnitt 22 platziert und für einen Überschubvorgang vorbereitet ist.

In einer zweiten Endlage bildet die Begrenzungsleiste 28 eine annähernd horizontale und dadurch mit der Auflagefläche 15 annähernd parallele oder in Überschubrichtung leicht nach unten geneigte Auflageleiste, die das Überschieben der gruppierten Artikel mittels des ersten Schiebers von der Auflagefläche 15 in den Jalousiegreiferkopf 10 ermöglicht und erleichtert. Die Begrenzungsleiste 28 ist zwischen den beiden Endlagen in Abhängigkeit von der jeweils aktuellen Position des Jalousiegreiferkopfes 10 in Bezug auf die Auflagefläche 15 des Auflagetischs 16 verschwenkbar, wie dies durch den Doppelpfeil D in Fig. 2 angedeutet ist. Dadurch, dass die Begrenzungsleiste 28 um die zur Auflagefläche 15 sowie zum Randabschnitt 22 parallele Achse 30 verschwenkbar ist, kann sie sowohl ihre Funktionen als Anschlagleiste als auch als Auflage- bzw. Gleitfläche bzw. Auflageblech für die in den Jalousiegreiferkopf 10 zu überschiebenden Artikel in gewünschter Weise erfüllen.

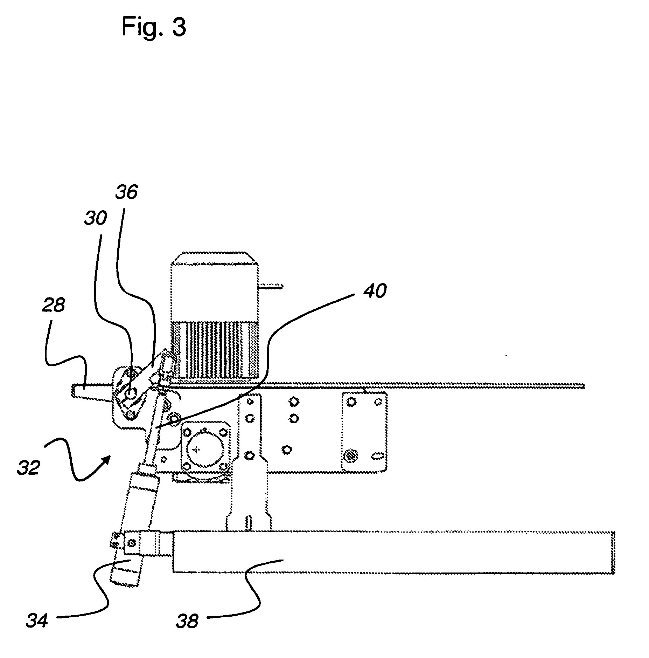

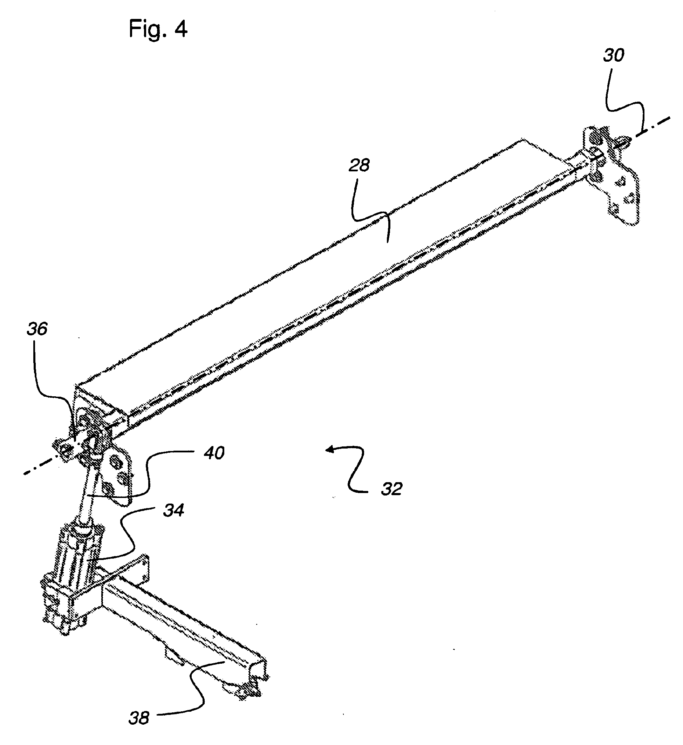

Wie anhand der Fig. 2 angedeutet sowie anhand der schematischen Darstellungen der Figuren 3 und 4 näher verdeutlicht, weist die Begrenzungsleiste 28 eine steuerbare Stelleinrichtung 32 zur Ausführung der Schwenkbewegung um die Schwenkachse 30 zwischen den beiden Endlagen auf. Die Stelleinrichtung 32 ist in der dargestellten Ausführungsform durch einen fluidisch betätigbaren Linearmotor 34 gebildet der an die Begrenzungsleiste 28 über eine Koppelstange 36 angreift. Auf diese Weise ist eine schnelle und präzise Stellbewegung über einen kurzen Verstellweg ermöglicht.

Solange sich der Jalousiegreiferkopf 10 noch nicht in seiner Übernahmeposition nahe am Randabschnitt 22 und auf gleichem Niveau mit diesem befindet, dient die in vertikale Richtung nach oben verschwenkte Begrenzungsleiste 28 als Anschlag für die gruppierten Artikel und verhindert, dass diese vorzeitig über den Randabschnitt 22 geschoben werden. Um das Überführen der gruppierten Artikel in den Jalousiegreiferkopf 10 zu ermöglichen, wird diese Begrenzungsleiste 28 um die Schwenkachse 30 entsprechend der Darstellung der Fig. 2 nach unten verschwenkt, so dass sie sich in einer horizontalen Lage und/oder auf dem Niveau der Auflagefläche 15 des Auflagetischs 16 befindet und den zu überführenden Artikel keinen Widerstand mehr entgegen setzen kann.

Wie anhand der schematischen Darstellungen der Fig. 3 und Fig. 4 verdeutlicht, ist der Linearmotor 34 der Stelleinrichtung 32 ein gelenkig in einem Rahmenelement 38 gelagerter Stellzylinder, der wahlweise mittels pneumatischen oder hydraulischen Drucks betätigt werden kann. Eine Verlängerung einer Kolbenstange 40 ist über ein Gelenk mit der Koppelstange 36 verbunden, die wiederum drehfest mit einem seitlich an der Begrenzungsleiste 28 angreifenden Wellenstumpf verbunden ist. Auf diese Weise kann mittels einer definierten Stellbewegung des Linearmotors 34 bzw. des Stellzylinders ein definierter Schwenkwinkel der Begrenzungsleiste 28 um deren Schwenkachse 30 (vgl. Fig. 4) überstrichen werden. Der Verstellwinkel bzw. Schwenkwinkel für die Begrenzungsleiste 28 zwischen der in Fig. 4 gezeigten Überschublage (horizontal liegend) und der hier nicht dargestellten vertikalen Anschlaglage (vertikal stehend) beträgt zweckmäßigerweise ca. 90 Grad, wobei die Leiste 28 um die horizontal liegende und geringfügig von der Randkante des Auflagetischs 16 beabstandeten Schwenkachse 30 verschwenkt wird.

Wie anhand der Fig. 4 verdeutlicht, ist die Begrenzungsleiste 28 aufgrund ihrer Baulänge sinnvollerweise beidseitig drehbar gelagert, sinnvollerweise in geeigneten Lagerböcken oder -blechen, die am Rand des Auflagetischs 16 bzw. unterhalb dessen Auflageebene 15 befestigt sind, wie dies anhand der Figuren 3 und 4 erkennbar wird. Eine beidseitige Anbringung einer Stelleinrichtung 32 ist hier nicht dargestellt und wäre optional zu verstehen, ist in der Praxis allerdings nicht unbedingt notwendig, da für das Verschwenken der Begrenzungsleiste 28 keine sehr hohen Betätigungskräfte aufgebracht werden müssen. Somit ist eine einseitige Betätigung entsprechend Fig. 4 für die vorliegenden Zwecke in aller Regel ausreichend.

### Bezugszeichenliste

- 10: Jalousiegreiferkopf
- 12: Stützsäule
- 14: Auslegerarm
- 15: Auflagefläche
- 16: Auflagetisch
- 18: Käfig
- 20: Umlenkrollen
- 22: Randabschnitt
- 24: Anschlagleiste
- 26: Schwenkgelenk
- 28: Begrenzungsleiste
- 30: Schwenkachse
- 32: Stelleinrichtung
- 34: Linearmotor
- 36: Koppelstange
- 38: Rahmenelement
- 40: Kolbenstange
- D: Doppelpfeil

## Patentansprüche

1. Flächige Begrenzungsleiste (28) für auf einer Auflagefläche (15) gruppierte Artikel, welche Auflagefläche (15) an drei Seiten durch aufeinander zu bewegliche Schieber begrenzt ist und an einer vierten Seite eine Überschubstelle zu einer höhen- und/oder lagebeweglichen Handhabungseinrichtung aufweist, wobei die Begrenzungsleiste (28) um eine parallel zur Auflagefläche (15) und unterhalb dieser angeordneten, geringfügig von der Randkante der Auflagefläche (15) beabstandete Achse (30) zwischen zwei Endlagen verschwenkbar ist, und wobei die Begrenzungsleiste (28) in einer ersten Endlage eine einem ersten, in Richtung der Überschubstelle beweglichen Schieber gegenüber liegende Anschlagleiste (24) bildet.

2. Begrenzungsleiste (28) nach Anspruch 1, die in einer zweiten Endlage eine mit der Auflagefläche (15) annähernd parallele oder in Überschubrichtung leicht nach unten geneigte Auflageleiste bildet.

3. Begrenzungsleiste (28) nach Anspruch 1 oder 2, die zwischen den beiden Endlagen in Abhängigkeit von einer Position der Handhabungseinrichtung in Bezug auf die Auflagefläche (15) verschwenkbar ist.

4. Begrenzungsleiste (28) nach einem der Ansprüche 1 bis 3, die um eine zur Auflagefläche (15) sowie zur vierten Seite parallele Achse (30) verschwenkbar ist.

5. Begrenzungsleiste (28) nach einem der Ansprüche 1 bis 4, die mit einer steuerbaren Stelleinrichtung (32) zur Ausführung der Schwenkbewegung zwischen den beiden Endlagen gekoppelt ist.

6. Begrenzungsleiste (28) nach einem der Ansprüche 1 bis 5, die eine elektromotorisch betätigbare Stelleinrichtung (32) aufweist.

7. Begrenzungsleiste (28) nach einem der Ansprüche 1 bis 6, die einen Linearmotor (34) als Stelleinrichtung (32) aufweist.

8. Begrenzungsleiste (28) nach einem der Ansprüche 1 bis 7, die einen fluidisch betätigbaren Linearmotor (34) als Stelleinrichtung (32) aufweist.

9. Begrenzungsleiste (28) nach einem der Ansprüche 5 bis 8, die über wenigstens eine Koppelstange (36) oder über ein Koppelgestänge mit der Stelleinrichtung (32) gekoppelt ist.

10. Begrenzungsleiste (28) nach einem der Ansprüche 1 bis 9, die in ihrer Schwenkbewegung mit einer Stellbewegung des ersten Schiebers gekoppelt ist.

11. Begrenzungsleiste (28) nach einem der Ansprüche 1 bis 10, bei der die Handhabungseinrichtung durch einen Jalousiengreiferkopf (10) gebildet ist.

12. Begrenzungsleiste (28) nach einem der Ansprüche 1 bis 11, bei der die Auflagefläche (15) Bestandteil einer Packstation ist.

## Claims

1. Planar limiting bar (28) for items grouped on a support surface (15), with said support surface (15) being limited on three sides by movable, mutually convergeable slides, and comprising on a fourth side a transfer point to a height- and/or position adjustable handling device, with the limiting bar (28) being pivotable between two end positions around an axis (30) that is parallel to the support surface (15) and arranged at a slight distance from the edge of and beneath said support surface (15), and with the limiting bar (28) forming a stop bar (24) in the first of the end positions, with said stop bar (24) then being arranged opposite the first movable slide in the direction of the transfer point.

2. Limiting bar (28) according to claim 1, forming, in the second end position, a support bar that is nearly parallel to the support surface (15) or slightly inclined downward in relation to the transfer direction.

3. Limiting bar (28) according to claim 1 or 2, being pivotable between the two end positions depending on the position of the handling device in relation to the support surface (15).

4. Limiting bar (28) according to one of the claims 1 to 3, being pivotable around an axis (30) that is parallel to the support surface (15) as well as to the fourth side.

5. Limiting bar (28) according to one of the claims 1 to 4, being coupled with a controllable setting device (32) for performing the pivoting movement between the two end positions.

6. Limiting bar (28) according to one of the claims 1 to 5, comprising an electromotively operable setting device (32).

7. Limiting bar (28) according to one of the claims 1 to 6, comprising a linear motor (34) that operates as a setting device (32).

8. Limiting bar (28) according to one of the claims 1 to 6, comprising a fluidically actuable linear motor (34) that operates as a setting device (32).

9. Limiting bar (28) according to one of the claims 5 to 8, being coupled with the setting device (32) by at least one coupling rod (36) or by a coupling rod assembly.

10. Limiting bar (28) according to one of the claims 1 to 9, being coupled in its pivoting movement with a setting movement of the first slide.

11. Limiting bar (28) according to one of the claims 1 to 10, in which the handling device is formed by a shutter-type gripper head (10).

12. Limiting bar (28) according to one of the claims 1 to 11, in which the support surface (15) is part of a packing station.

## Revendications

1. Baguette de limitation (28) plane pour des articles groupés sur une surface d'appui (15), laquelle surface d'appui (15) est délimitée sur trois côtés par des coulisseaux aptes à être rapprochés les uns des autres et présente sur un quatrième côté un endroit pour le passage coulissant à un dispositif de manipulation mobile en hauteur et/ou en position, ladite baguette de limitation (28) étant apte à pivoter entre deux positions extrêmes autour d'un axe (30) disposé parallèlement à ladite surface d'appui (15) et au-dessous de celle-ci et légèrement espacé de l'arête de bord de ladite surface d'appui (15), et ladite baguette de limitation (28) formant, dans une première position extrême, une baguette de butée (24) située en vis-à-vis d'un premier coulisseau mobile dans la direction dudit endroit de passage coulissant.

2. Baguette de limitation (28) selon la revendication 1, qui, dans une deuxième position extrême, forme une baguette d'appui qui est approximativement parallèle à ladite surface d'appui (15) ou qui est inclinée légèrement vers le bas dans la direction de passage coulissant.

3. Baguette de limitation (28) selon la revendication 1 ou 2, qui est apte à pivoter entre les deux positions extrêmes en fonction d'une position dudit dispositif de manipulation par rapport à la surface d'appui (15).

4. Baguette de limitation (28) selon l'une quelconque des revendications 1 à 3, qui est apte à pivoter autour d'un axe (30) parallèle à la surface d'appui (15) et au quatrième côté.

5. Baguette de limitation (28) selon l'une quelconque des revendications 1 à 4, qui est couplée à un dispositif de réglage (32) commandable, pour la réalisation du mouvement pivotant entre les deux positions extrêmes.

6. Baguette de limitation (28) selon l'une quelconque des revendications 1 à 5, qui comprend un dispositif de réglage (32) apte à être actionné par moteur électrique.

7. Baguette de limitation (28) selon l'une quelconque des revendications 1 à 6, qui comprend un moteur linéaire (34) en tant que dispositif de réglage (32).

8. Baguette de limitation (28) selon l'une quelconque des revendications 1 à 7, qui comprend, en tant que dispositif de réglage (32), un moteur linéaire (34) apte à être actionné de manière fluidique.

9. Baguette de limitation (28) selon l'une quelconque des revendications 5 à 8, qui est couplée audit dispositif de réglage (32) par au moins une barre d'accouplement (36) ou par une tringlerie d'accouplement.

10. Baguette de limitation (28) selon l'une quelconque des revendications 1 à 9, qui est couplée en son mouvement pivotant à un mouvement de réglage du premier coulisseau.

11. Baguette de limitation (28) selon l'une quelconque des revendications 1 à 10, dans laquelle ledit dispositif de manipulation est constitué par une tête preneuse à jalousie (10).

12. Baguette de limitation (28) selon l'une quelconque des revendications 1 à 11, dans laquelle ladite surface d'appui (15) est partie intégrante d'un poste d'emballage.
